# EUROPEAN PATENT SPECIFICATION

(11) **EP 2 149 678 B1**
(45) Date of publication and mention of the grant of the patent: **05.09.2012**
(21) Application number: 09166540.6
(22) Date of filing: 28.07.2009
(51) Int. Cl.: F01D 9/04, F01D 5/30, F16B 39/36, F04D 29/34, F04D 29/36

(54) **Connection assembly for connecting a blade to a support ring**
Verbindungsanordnung zur Verbindung einer Schaufel mit einem Trägerring
Agencement de liaison destiné à relier une aube et un anneau de support

(30) Priority: 28.07.2008 IT TO20080578
(43) Date of publication of application: 03.02.2010
(73) Proprietor: ANSALDO ENERGIA S.P.A., 16152 Genova (IT)
(72) Inventor: Bertino, Gianluigi, 16031, Bogliasco (IT)
(74) Representative: Jorio, Paolo

(56) References cited:
- EP-A- 1 398 516
- FR-A- 1 214 261
- GB-A- 2 039 331
- US-A- 3 521 974
- US-A- 4 169 692

## Description

The present invention relates to a connection assembly for connecting a blade to a support ring, in particular to an internal ring of a compressor stator.

As known, in gas turbine compressors, the stator blades have an aerodynamic profile, a head portion engaging a corresponding seat of an external ring, and a foot portion engaging a corresponding seat of an internal ring. In a known solution, the internal ring consists of two annular parts: the seats for the foot portions of the blades are obtained in a first of the two parts, while the second part axially closes these seats and is fixed by welding to the first part. The material about the seats is then plastically deformed on the sides of the blades, in order to improve clamping and prevent the blades themselves from vibrating.

This type of known solution is not satisfactory, because it requires long times and high costs for machining the two parts of the internal ring and for fixing them by welding. Furthermore, long times and high costs are further needed when the blades are to be disassembled and/or replaced for maintenance: indeed, the welding between the two parts of the internal ring must be cut and, after maintenance, must be restored.

Furthermore, the dented material at the sides of the blades tends to loosen its grip over time, whereby the blades start to be subjected to vibrations which quickly lead to breakage. In order to obviate such a loosening, an additional welding is needed at the zones about the foot portion, with further maintenance time and costs.

The use of couplings of threaded type are known in order to obviate these drawbacks, e.g. as described in patents EP780545, GB 2039331 and IT1123516. In particular, in the solution described in patent IT1123515, the blades of a turbine stage are free from the foot portion and have the head portion defined by a tang which is housed between two half-shells. The two half-shells, arranged side-by-side, define a pin engaging a through seat radially obtained in a ring sector, which is fixed to a casing of the turbine. The pin has a threaded end portion, which protrudes beyond the through seat and carries a nut screwed thereon. The nut is tightened against an external surface of the ring sector by means of the interposition of a washer, so as to clamp the pin, with the tang therein, and thus the blade which remains radially protruding inwards.

This type of connection is not very satisfactory, because it causes relatively large dimensions in the radial direction between the blades and the turbine casing and requires a particular connection system for coupling the ring sectors to the casing, due to the position of the nut. Furthermore, the shape of the half-shells which define the pin is established to couple with a specific blade, which is mounted in a cantilever way on the external ring, whereby it is not suitable for the stator blades and the internal rings which are normally used in a compressor.

Another solution is shown in US4169692, which discloses a retaining device to prevent relative movement between a cantilevered turbine vane and a fixed turbine housing, through which the vane trunnion passes. A predetermined radial clearance is maintained between the vane and the fixed turbine housing, thereby eliminating binding between the two structures.

It is the object of the present invention to provide a connection assembly for connecting a blade to a support ring, in particular to an internal ring of a compressor stator, which allows to solve the above-described problems in a simple and cost-effective manner.

According to the present invention, a connection assembly comprising a support ring and at least one blade, said connection assembly being suitable for connecting said blade to said support ring and further comprising:
- a through hole made in a sector of said support ring along an axis and housing one end of said blade;
- an externally threaded pin, at least partially fitted into said hole, and comprising two substantially semi-cylindrical portions, which are diametrically opposed and define a seat therebetween, which is engaged by said blade end;
- a fastening body screwed onto the threading of said pin and having a stop surface axially resting, either directly or indirectly, against a shoulder of said sector;
**characterized in that** the threading of said pin and said fastening body are at least partially housed in said hole.

The invention will now be described with reference to the accompanying drawings which illustrate a non-limitative embodiment thereof, in which:
- figure 1 diagrammatically shows a mounting step for connecting blades to a support ring, in particular to an internal stator ring, by means of a preferred embodiment of the connection assembly according to the present invention;
- figure 2 is similar to figure 1 and shows a perspective view of the connection assembly of the present invention, on enlarged scale and in greater detail;
- figure 3 shows a section view of the connection assembly according to the line III-III in figure 1, once mounted;
- figure 4 is similar to figure 3 and shows a first variant of the connection assembly;
- figure 5 is similar to figure 2 and shows a second variant of the connection assembly with parts removed for clarity; and
- figure 6 diagrammatically shows a section view of the variant in figure 5 at the end of the mounting step.

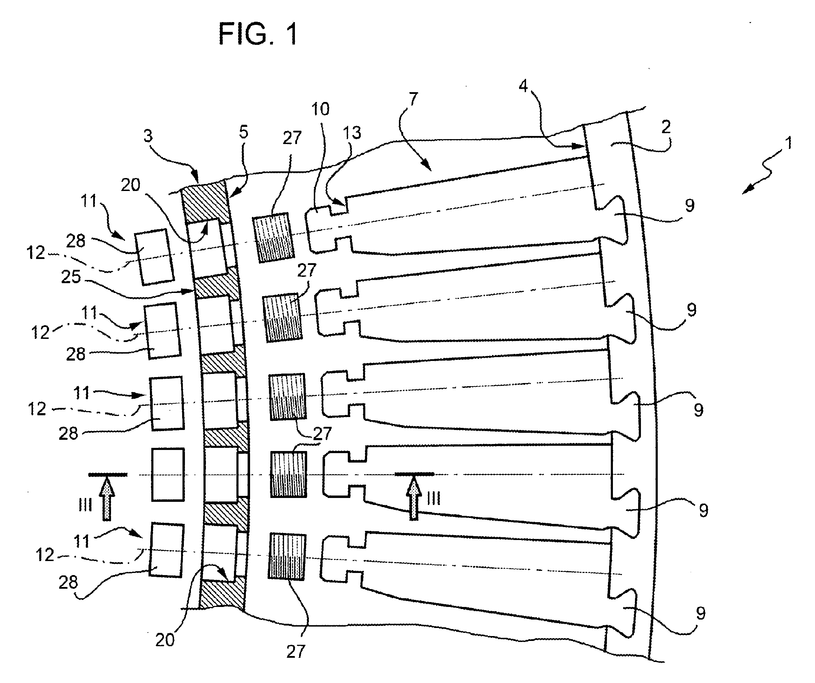

In figure 1, numeral 1 indicates a stator (partially shown) of a compressor as a whole. Stator 1 comprises an external ring 2 and an internal ring 3, only one corresponding sector of which is shown. The rings 2 and 3 have respective facing surfaces 4 and 5 to delimit an annular pipe for a fluid. Stator 1 then comprises a plurality of blades 7, each of which consists of an aerodynamic profile 8 arranged between the surfaces 4,5, of one end 9 defining a head fixed to the ring 2 in a known manner and not described in detail, and of one end 10 defining a foot fixed to the ring 3 by means of a connection assembly 11.

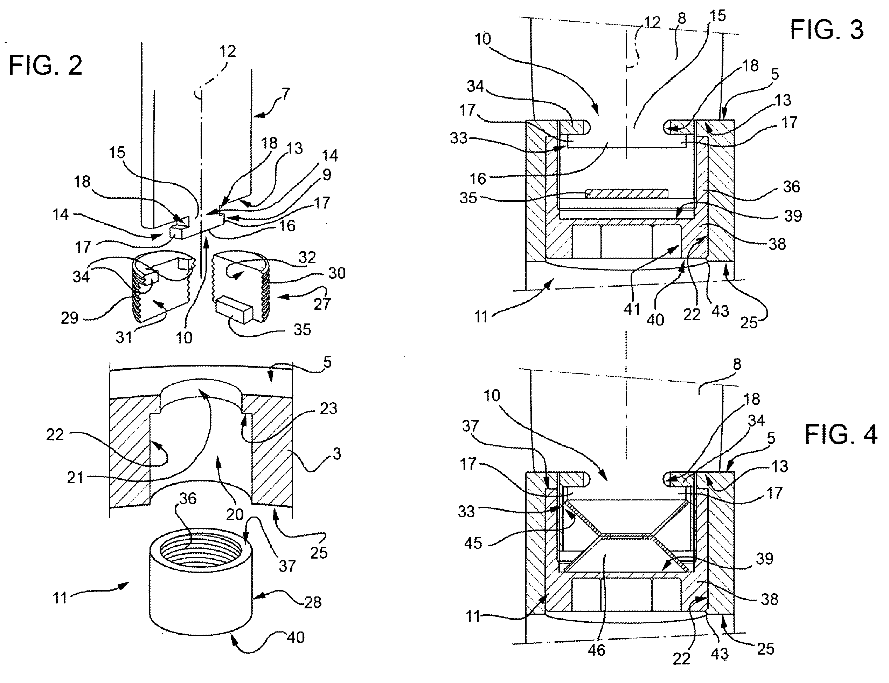

With reference to figure 2, the foot 10 extends along an axis 12 from a base surface 13 of the aerodynamic profile 8 and has a flattened shape with a side profile shaped either as a hammer or an upside-down T. The foot 10 is delimited by two flat faces 14, which are parallel to each other and to the axis 12 and are substantially an axial extension of the belly and back surfaces of the aerodynamic profile 8.

Foot 10 comprises a shank 15, which axially protrudes from the surface 13, and a head 16, which has two diametrically opposite appendixes 17, so as to define two recesses 18 along the side edges of shank 15.

Assembly 11 comprises a hole 20, which is made in the sector of the ring 3, through and along the axis 12, is free from threading, and comprises two coaxial cylindrical portions 21,22 joined together by an annular shoulder 23 orthogonal to axis 12. Portion 21 exits through surface 5, while portion 22 exits through the internal cylindrical surface 25 of ring 3 and has a larger cross-section than that of portion 21.

With reference to figures 2 and 3, assembly 11 further comprises a pin or catch 27 and a cup-like body 28, which are screwed to each other, are coaxial to hole 20 and, according to the invention, are at least partially housed in the hole 20.

Pin 27 comprises two substantially semi-cylindrical portions 29,30, which have an external threading in common, are arranged on diametrically opposite parts of foot 10 and are completely housed in the hole 20.

The portions 29,30 define distinct parts having respective flat surfaces 31,32 facing the faces 14, so as to delimit a slit 33 engaged by the foot 10 in an angularly fixed manner about the axis 12. Part 29 comprises two teeth 34, which protrude from the surface 31 and engage the recesses 18. Part 30, instead, comprises a tooth 35, which protrudes from the surface 32 and is adjacent to the head 16 along the axis 12.

The cup-like body 28 is cylindrical with an external diameter which rounds down the diameter of the portion 22 of hole 20, and is completely housed in portion 22. The cup-like body 28 comprises a tubular portion 36, which axially ends with an annular surface 37 orthogonal to axis 12 and has a internal threading screwed onto the threading of the parts 29,30 so as to axially fasten the surface 37 against shoulder 23. Such a fastening causes an axial traction of the teeth 34 on the appendixes 17 and, therefore, the press fitting of the surface 13 against surface 5.

The cup-like body 28 comprises a base portion 38, which is axially delimited by a face 39, inside the cup-like body 28, and by an external face 40, on which an hexagonal seat 41 for an Allen wrench is obtained. At the circular edge between surface 25 and hole 20, a portion 43 of the ring 3 is preferably plastically deformed so as to stop against the face 40 and avoid the cup-like body 28 fro being loosened.

Figure 4 shows a first variant, the component parts of which are illustrated, where possible, with the same reference numerals as in figures 1-3. In such a variant, the pin 27 is free from the tooth 35, but has a centring seat 45 which houses the axial end of an elastic device 46 axially interposed between foot 10 and face 39. The elastic device 46 is defined by one or more springs in series, e.g. Belleville washers, arranged in contact against the face 39, on one side, and against the head 16, on the other side, to eliminate clearances between the appendixes 17 and the teeth 34 and to avoid vibrations of blade 7.

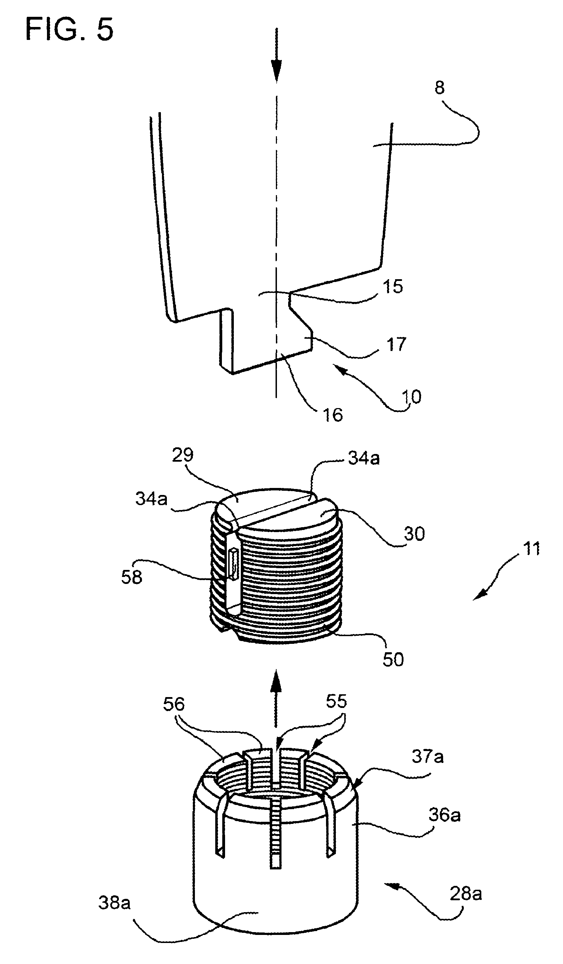

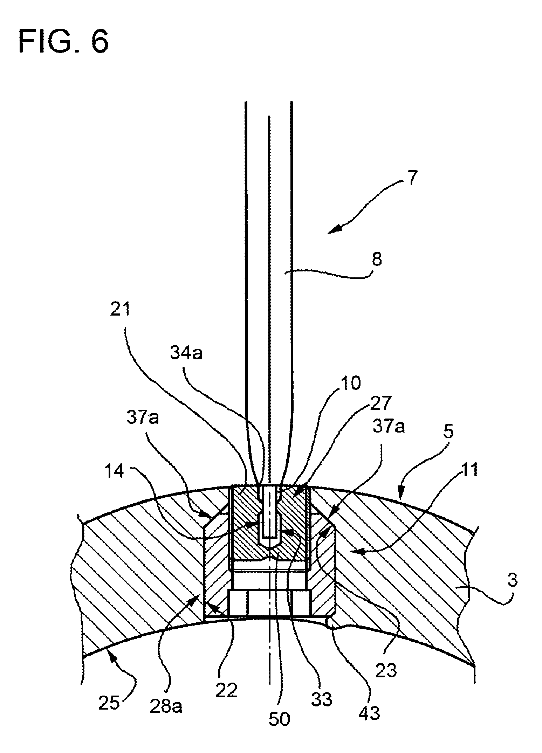

Figures 5 and 6 show a second variant, the component parts of which are indicated, where possible, with the same reference numerals as in figures 1-3. In such a variant, the pin 27 is enbloc, because it comprises an end portion 50, which bears the portions 29,30 in a cantilever way and defines the beginning of the external threading of the portions 29,30. The pin 27 is arranged straddling the foot 10, i.e. with the portion 50 axially arranged by the side of foot 10.

The portions 29,30 are free from the teeth 34,35, and comprise respective protrusions 34a arranged in contact against the faces 14. The cup-like body 28 is replaced by a ring nut 28a, which comprises, at an axial end, an internally threaded tubular portion 36a and, at the opposite end, a tubular portion 38a defining the hexagonal seat 41.

Portion 36a is provided with notches 55, which circumferentially define a plurality of elastically deformable sectors 56 therebetween, which axially ending with a surface 37a fastened against the shoulder 23. Surface 37a and shoulder 23 are conical with convergence from the surface 25 towards the surface 5 to serve a wedge function: by fastening the ring nut 28a on the pin 27, the shoulder 23 acts on the surface 37a and makes the sectors 56 bend inwards, which sectors bite into the portions 29,30 so as to grip and clamp the foot 10 by fiction between the protrusions 34a.

The head 16 has a single appendix 17, on one side, and an edge parallel to axis 12, on the other side, and arranged in abutment in the radial direction against a reference tooth 58, which protrudes into the slit 33 from one of the portions 29,30.

During the step of mounting (figure 1), the pins 27 are coupled to the respective feet 10 once the heads 9 of the blades 7 have been fixed to the sector of ring 2. In turn, the feet 10 of all the blades 7, while carrying the pins 27, are simultaneously inserted into the corresponding holes 20 of the sector of ring 3.

The cup-like bodies 28 are then inserted into portion 22 of the holes 20, thus interposing the elastic device 46, where provided, and are fastened onto the threading of the pins 27, until the surfaces 37 stop against the shoulders 23. As previously explained, fastening the surface 37 against the shoulder 23 causes the clamping of blade 7. Finally, the portion 43 is plastically deformed onto the face 40 so as to clamp the cup-like body 28, as a non-release device. With regards to the variant in figures 5 and 6, the pin 27 may be coupled straddling the foot 10 once the foot 10 itself has been inserted into the portion 21 of the corresponding hole 20, by axially inserting the pin 27 into the portion 22 of the holes 20.

From the above it is apparent that housing the external threading of the pin 27 and at least part of the cup-like body 28 or ring nut 28a in the hole 20 allows to have a relatively compact and simple stator to be coupled to the remaining components of the compressor. In particular, the cup-like bodies 28 or ring nuts 28a remain completely under the surface 25, whereby they do not generate any encumbrance along the axis 12 beyond the ring 3.

By virtue of such a compactness and the particular constructional features of the pin 27, the assembly 1 may be used with blades 7 of traditional type, shown in figures from 1 to 4, without requiring to modify the blades 7 themselves.

By virtue of the threaded couplings, the sectors of the ring 3 are formed enbloc, and mounting and possibly replacing the blades 7 for maintenance is relatively simple and fast. At the same time, the included threaded coupling keep the connection firm without vibrations, especially with the addition of the elastic device 46.

Finally, it is apparent from the above that changes and variations may be made to the described assembly 11 without departing from the scope of protection of the present invention, as defined in the appended claims.

In particular, washers or other non-release devices could be associated with the threading or could be provided between surface 37 and shoulder 23; and/or the shoulder 23 could be arranged in a different position and, for example, define a part of surface 25; and/or the cup-like body 28 or ring nut 28a could be replaced by a different fastening body, e.g. with an external flange defining the surface 37.

## Claims

1. A connection assembly (11) comprising a support ring (3) and at least one blade (7), said connection assembly being suitable for connecting said blade to said support ring (3) and further comprising:
- a through hole (2) made in a sector of said support ring (3) along an axis (12) and housing one end (10) of said blade (7);
- an externally threaded pin (27), at least partly fitted into said hole (20), and comprising two substantially semi-cylindrical portions (29,30), which are diametrically opposed and define, between them, a seat (33) engaged by said blade end (10);
- a fastening body (28; 28a) screwed onto the threading of said pin (27) and having a stop surface (37; 37a) axially resting, either directly or indirectly, against a shoulder (23) of said sector;
**characterized in that** the threading of said pin (27) and said fastening body (28; 28a) are at least partially housed in said hole (20).

2. The assembly according to claim 1, **characterized in that** said pin (27) is totally housed in said hole.

3. The assembly according to claim 2, **characterized in that** said shoulder (23) is located inside said hole and defines the junction between two cylindrical hole portions (21; 22) having a different cross-section one from the other.

4. The assembly according to claim 3, **characterized in that** said fastening body (28; 28a) is totally housed inside the cylindrical hole portion (22) having the largest cross-section.

5. The assembly according to claim 3 or 4, **characterized in that** said fastening body (28; 28a) has an external diameter that is a conservative approximation of the internal diameter of the respective cylindrical hole portion (22) and comprises an end portion (38;38a) defining an hexagonal internal seat (41).

6. The assembly according to any of the previous claims, **characterized in that** said seat is a slit (33) defined by flat surfaces (31, 32) and engaged in an angularly fixed way by a blade end (10) having a flat shape.

7. The assembly according to claim 6 **characterized in that** one of said substantially semi-cylindrical portions (29, 30) comprises al least one tooth (34), which protrudes into said slit (33) and engages one recess (18) defined by said blade end (10).

8. The assembly according to any of the previous claims, **characterized in that** said substantially semi-cylindrical portions (29, 30) are radially pressed against said blade end (10) to hold said blade end (10) by friction.

9. The assembly according to claim 8, **characterized in that** said fastening body (28; 28a) comprises at least one flap (56), that is elastically deformed so as to radially push against at least one of said substantially semi-cylindrical portions (29, 30).

10. The assembly according to claim 9, **characterized in that** said flap (56) axially ends with said stop surface (37a), and **in that** said shoulder (23) and/or said stop surface (37a) define a wedge surface to elastically deform said flap (56) towards said axis (12) when said fastening body (28a) is screwed.

11. The assembly according to any of the previous claims, **characterized in that** said pin (27) is enbloc.

12. The assembly according to claim 11, **characterized in that** said pin comprises an end portion (50) bearing in a cantilever way said substantially semi-cylindrical portions (29, 30) and defining the leading end of the external threading of said substantially semi-cylindrical portions (29, 30).

## Patentansprüche

1. Verbindungsanordnung (11), die einen Tragring (3) und wenigstens eine Schaufel (7) umfasst, wobei die Verbindungsanordnung geeignet ist, die Schaufel mit dem Tragring (3) zu verbinden, und ferner umfasst:
- ein Durchgangsloch (2), das in einem Sektor des Tragrings (3) längs einer Achse (12) ausgebildet ist und ein Ende (10) der Schaufel (7) aufnimmt;
- einen Stift (27) mit Außengewinde, der wenigstens teilweise in das Loch (20) eingesetzt ist und zwei im Wesentlichen halbzylindrische Abschnitte (29, 30) aufweist, die diametral gegenüberliegen und zwischen sich einen Sitz (33) definieren, in dem das Schaufelende (10) in Eingriff ist;
- einen Befestigungskörper (28; 28a), der auf das Gewinde des Stifts (27) geschraubt ist und eine Anschlagoberfläche (37; 37a) besitzt, die axial entweder direkt oder indirekt an einer Schulter (23) des Sektors aufliegt;
**dadurch gekennzeichnet, dass** das Gewinde des Stifts (27) und der Befestigungskörper (28; 28a) wenigstens teilweise in dem Loch (20) aufgenommen sind.

2. Anordnung nach Anspruch 1, **dadurch gekennzeichnet, dass** der Stift (27) vollständig in dem Loch aufgenommen ist.

3. Anordnung nach Anspruch 2, **dadurch gekennzeichnet, dass** sich die Schulter (23) in dem Loch befindet und den Übergang zwischen den zwei zylindrischen Lochabschnitten (21; 22) mit voneinander verschiedenem Querschnitt definiert.

4. Anordnung nach Anspruch 3, **dadurch gekennzeichnet, dass** der Befestigungskörper (28; 28a) vollständig in dem zylindrischen Lochabschnitt (22) mit dem größten Querschnitt aufgenommen ist.

5. Anordnung nach Anspruch 3 oder 4, **dadurch gekennzeichnet, dass** der Befestigungskörper (28; 28a) einen Außendurchmesser besitzt, der eine konservative Approximation des Innendurchmessers des jeweiligen zylindrischen Lochabschnitts (22) ist und einen Endabschnitt (38; 38a) aufweist, der einen sechseckigen inneren Sitz (41) definiert.

6. Anordnung nach einem der vorhergehenden Ansprüche, **dadurch gekennzeichnet, dass** der Sitz ein Schlitz (33) ist, der durch ebene Oberflächen (31, 32) definiert ist und mit einem Schaufelende (10), das eine flache Form besitzt, winkelfest in Eingriff ist.

7. Anordnung nach Anspruch 6, **dadurch gekennzeichnet, dass** einer der im Wesentlichen halbzylindrischen Abschnitte (29, 30) wenigstens einen Zahn (34) aufweist, der in den Schlitz (33) vorsteht und mit einer durch das Schaufelende (10) definierten Aussparung (18) in Eingriff ist.

8. Anordnung nach einem der vorhergehenden Ansprüche, **dadurch gekennzeichnet, dass** die im Wesentlichen halbzylindrischen Abschnitte (29, 30) radial gegen das Schaufelende (10) gepresst sind, um das Schaufelende (10) durch Reibung zu halten.

9. Anordnung nach Anspruch 8, **dadurch gekennzeichnet, dass** der Befestigungskörper (28; 28a) wenigstens eine Klappe (56) aufweist, die elastisch verformt wird, um radial gegen wenigstens einen der im Wesentlichen halbzylindrischen Abschnitte (29, 30) zu schieben.

10. Anordnung nach Anspruch 9, **dadurch gekennzeichnet, dass** die Klappe (56) axial in der Anschlagoberfläche (37a) endet und dass die Schulter (23) und/oder die Anschlagoberfläche (37a) eine Keiloberfläche definieren, um die Klappe (56) zu der Achse (12) elastisch zu verformen, wenn der Befestigungskörper (28a) aufgeschraubt wird.

11. Anordnung nach einem der vorhergehenden Ansprüche, **dadurch gekennzeichnet, dass** der Stift (27) einteilig ausgebildet ist.

12. Anordnung nach Anspruch 11, **dadurch gekennzeichnet, dass** der Stift einen Endabschnitt (50) aufweist, der die im Wesentlichen halbzylindrischen Abschnitte (29, 30) auslegerartig trägt und das vordere Ende des Außengewindes der im Wesentlichen halbzylindrischen Abschnitte (29, 30) definiert.

## Revendications

1. Assemblage de liaison (11) comprenant une bague de support (3) et au moins une lame (7), ledit assemblage de liaison étant adapté pour relier ladite lame à ladite bague de support (3) et comprenant en outre :
un trou traversant (2) réalisé dans un secteur de ladite bague de support (3) le long d'un axe (12) et logeant une extrémité (10) de ladite lame (7) ;
une broche filetée extérieurement (27), ajustée au moins partiellement dans ledit trou (20), et comprenant deux parties essentiellement semi-cylindriques (29, 30), qui sont diamétralement opposées et définissent, entre elles, un siège (33) engagé par ladite extrémité de lame (10) ;
un corps de fixation (28 ; 28a) vissé sur le filetage de ladite broche (27) et ayant une surface de butée (37 ; 37a) s'appuyant axialement, soit directement soit indirectement, contre un épaulement (23) dudit secteur ;
**caractérisé en ce que** le filetage de ladite broche (27) et ledit corps de fixation (28 ; 28a) sont au moins partiellement logés dans ledit trou (20).

2. Assemblage selon la revendication 1, **caractérisé en ce que** ladite broche (27) est totalement logée dans ledit trou.

3. Assemblage selon la revendication 2, **caractérisé en ce que** ledit épaulement (23) est situé à l'intérieur dudit trou et définit la jonction entre deux parties de trou (21 ; 22) cylindriques ayant une partie en coupe transversale différente de l'autre.

4. Assemblage selon la revendication 3, **caractérisé en ce que** ledit corps de fixation (28 ; 28a) est totalement logé à l'intérieur de la partie de trou (22) cylindrique ayant la plus grande coupe transversale.

5. Assemblage selon la revendication 3 ou 4, **caractérisé en ce que** ledit corps de fixation (28 ; 28a) a un diamètre externe qui est une approximation conservatrice du diamètre interne de la partie de trou (22) cylindrique respective et comprend une partie d'extrémité (38 ; 38a) définissant un siège interne hexagonal (41).

6. Assemblage selon l'une des revendications précédentes, **caractérisé en ce que** ledit siège est une fente (33) définie par des surfaces planes (31, 32) et engagée d'une manière angulairement fixe par une extrémité de lame (10) ayant une forme plate.

7. Assemblage selon la revendication 6, **caractérisé en ce que** l'une desdites parties essentiellement semi-cylindriques (29, 30) comprend au moins une dent (34), qui fait saillie dans ladite fente (33) et vient en prise avec un évidement (18) défini par ladite extrémité de lame (10).

8. Assemblage selon l'une des revendications précédentes, **caractérisé en ce que** lesdites parties essentiellement semi-cylindriques (29, 30) sont radialement pressées contre ladite extrémité de lame (10) pour maintenir ladite extrémité de lame (10) par friction.

9. Assemblage selon la revendication 8, **caractérisé en ce que** ledit corps de fixation (28 ; 28a) comprend au moins un rabat (56), qui est élastiquement déformé de manière à s'appuyer radialement contre au moins l'une desdits parties essentiellement semi-cylindriques (29, 30).

10. Assemblage selon la revendication 9, **caractérisé en ce que** ledit rabat (56) se termine axialement avec ladite surface de butée (37a), et **en ce que** ledit épaulement (23) et/ou ladite surface de butée (37a) définissent une surface de coin pour déformer élastiquement ledit rabat (56) vers ledit axe (12) lorsque ledit corps de fixation (28a) est vissé.

11. Assemblage selon l'une des revendications précédentes, **caractérisé en ce que** ladite broche (27) est monobloc.

12. Assemblage selon la revendication 11, **caractérisé en ce que** ladite broche comprend une partie d'extrémité (50) portant en porte-à-faux lesdites parties essentiellement semi-cylindriques (29, 30) et définissant l'extrémité d'attaque du filetage externe desdites parties essentiellement semi-cylindriques (29, 30).
